# EUROPÄISCHE PATENTANMELDUNG

(11) **EP 1 752 702 A1**
(43) Veröffentlichungstag der Anmeldung: **14.02.2007**
(21) Anmeldenummer: 06016419.1
(22) Anmeldetag: 07.08.2006
(51) Int. Cl.: F16P 3/14

(54) **Verfahren und System zur Überwachung von Kollisionen zwischen Robotern und Personen**

(30) Priorität: 05.08.2005 DE 102005037650
(71) Anmelder: Reis GmbH & Co. KG Maschinenfabrik, 63785 Obernburg (DE)
(72) Erfinder: Kroth, Eberhard Dr., 63785 Obernburg (DE)
(74) Vertreter: Stoffregen, Hans-Herbert

(57) **Zusammenfassung**

Die Erfindung bezieht sich auf ein Verfahren und System zur Überwachung von Kollisionen zwischen den in einem definierten Bereich angeordneten stationären und/oder mobilen Robotern und zumindest einer sich in dem definierten Bereich bewegenden Person. Um ein flexibles und übergeordnetes Überwachungssystem zu realisieren ist vorgesehen, dass die Position der Person (P1...PN) in dem definierten Bereich (B) mittels eines Navigationssystcms (NS) fortlaufend erfasst wird, wobei die Position der Person (P1...PN) ständig mit einer jedem Roboter (R1...RN) zugeordneten definierten Sicherheitszone (SZ1...SZN) verglichen wird und wobei bei Annäherung und/oder bei Eintritt der Person (P1...PN) in die Sicherheitszone (SZ1...SZN) entsprechend vorgegebener Sicherheitsparameter der jeweilige Roboter (R1...RN) in einen gefahrlosen Zustand überführt wird.

## Beschreibung

Die Erfindung bezieht sich auf ein Verfahren und System zur Überwachung von Kollisionen zwischen den in einem definierten Bereich angeordneten stationären und/oder mobilen Robotern und zumindest einer sich in dem definierten Bereich bewegenden Person

Aus der WO-A-2005/015257 ist ein System zur Bestimmung der Position eines beweglichen Transceivers in Bezug auf ortsfeste Transponder beschrieben. Die Anordnung umfasst eine Basisstation zum Aussenden eines Basissignals und/oder zum Empfangen von Transpondersignalen, eine Vielzahl von Transpondern zum Empfang des Basissignals und zum Aussenden von Transpondersignalen sowie Mittel zum Bestimmen der Position des mobilen Objekts unter Berücksichtigung der Transpondersignale und zeichnet sich dadurch aus, dass die Basisstation am mobilen Objekt angeordnet ist und dass die Position der Transponder im Raum bekannt ist.

Dieser Ausführungsform liegt der Nachteil zu Grunde, dass betreffend der Anordnung der Transponder im Raum ein erheblicher apparativer Aufbau notwendig ist.

Die EP-A-0 222 113 bezieht sich auf ein Kollisionsvermeidungssystem. Wenn ein Abstand zwischen zwei Roboterarmen kleiner als ein vordefinierter Abstand ist, wird die Geschwindigkeit eines der Arme verringert, um eine Kollision zu vermeiden. In Abhängigkeit des Abstandes zwischen den Armen werden ein erstes und ein zweites Geschwindigkeits-Verringerungssignal erzeugt und bei Erreichen eines dritten Abstandes wird ein Stoppsignal erzeugt.

In der DE-C-44 08 982 wird ein autonomes Navigationssystem für einen mobilen Roboter oder Manipulator beschrieben, dessen Aufgabe darin besteht, den Roboter trotz unvollständiger Informationen zu einem vorgegebenen Zeitpunkt durch den Arbeitsraum zu führen, ohne dass er mit bekannten oder unbekannten Hindernissen kollidiert. Dazu werden alle Operationen auf der lokalen Navigationsebene im Roboter-Koordinatensystem durchgeführt. Hierbei werden belegte und freie Bereiche des Arbeitsraums entsprechend markiert und detektierte Hindernisse werden mit Sicherheitszonen abgedeckt. Dieses System ist allerdings zur Vermeidung von Kollisionen zwischen Robotern und sich bewegenden Personen ungeeignet.

In der Zusammenfassung der JP-A-2003084831 ist ein Roboterfahr-Steuerungssystem beschrieben. Dieses ist mit einem GPS-Empfänger und einer GPS-Antenne in einem Roboter versehen, um unmittelbar von mehreren GPS-Satelliten ausgesendete GPS-Signale zu empfangen und die Positionsinformation der Roboter zu berechnen. Zusätzlich sind GPS-Rückstrahler beispielsweise an Decken von Gebäuden angeordnet, um simulierte GPS-Signale auszusenden. Die Roboter ihrerseits verarbeiten die Positionsinformation und bestimmen ihre Fahrroute oder die Positionsinformation wird zu einem Führungselement gesendet, um die Fahrroute mit dem Führungselement zu bestimmen und die Roboter zu instruieren. Ein Schutz von Personen ist nicht erwähnt.

Aus dem Stand der Technik sind beispielsweise Verfahren und Systeme bekannt, bei denen eine Sicherheitszone eines stationären Roboters optisch überwacht wird, wobei bei Eintritt einer Person in die überwachte Sicherheitszone der Roboter in einen gefahrlosen Zustand überführt bzw. abgeschaltet wird.

Derartige Verfahren und Systeme weisen jedoch den Nachteil auf, dass diese auf einen Roboter bezogen sind, d. h. dass für jeden in dem definierten Bereich angeordneten Roboter ein eigenständiges Überwachungssystem notwendig ist, um die geforderte Sicherheit für Personen zu gewährleisten.

Davon ausgehend liegt der vorliegenden Erfindung das Problem zu Grunde, ein Verfahren und ein System der eingangs genannten Art dahingehend weiterzubilden, dass ein flexibles und übergeordnetes Überwachungssystem realisiert wird.

Das Problem wird durch ein Verfahren u. a. dadurch gelöst, dass ausschließlich Personen den definierten Bereich betreten können, die eine in dem Navigationssystem registrierte Sendereinheit tragen, dass die Position der sich in dem definierten Bereich bewegenden Person mittels eines Navigationssystems fortlaufend erfasst wird, wobei die Position der Person ständig mit einer dem zumindest einen Roboter zugeordneten definierten Sicherheitszone verglichen wird und wobei bei Annäherung und/oder Eintritt der Person in die Sicherheitszone entsprechend vorgegebener Sicherheitsparameter der jeweilige Roboter in einen gefahrlosen Zustand überführt wird.

Das Verfahren zeichnet sich gegenüber dem Stand der Technik dadurch aus, dass der definierte Bereich mittels des Navigationssystems flächendeckend überprüfbar ist. Die Position der sich in dem definierten Bereich bewegenden Person kann mit zuvor abgespeicherten Sicherheitszonen von stationären und/oder mobilen Robotern verglichen werden. Das System ist sehr flexibel an sich ändernde Umgebungsbedingungen, insbesondere Austausch und Veränderung der Position von Robotern anpassbar. Die Sendereinheit dient als Zugangskontrolle zu dem definierten Bereich.

In einer bevorzugten Ausführungsform ist vorgesehen, dass die Geschwindigkeit einer Handhabungseinrichtung des Roboters bei Eintritt der Person in die Sicherheitszone verringert wird. Alternativ kann der Roboter auch bei Eintritt der Person in die Sicherheitszone abgeschaltet werden.

Des Weiteren ist vorgesehen, dass die Person vor dem Betreten des definierten Bereichs eine Sendereinheit aufnimmt und dass die Position der Person durch in dem definierten Bereich angeordnete Empfänger erfasst wird.

Die Sicherheitszone jedes in dem definierten Bereich angeordneten Roboters sowie dessen spezifische Sicherheitsparameter können in einem Speicher des Navigationssystems gespeichert werden.

Sofern sich in dem definierten Bereich auch zumindest ein mobiler Roboter befindet, kann die Position des mobilen Roboters durch das Navigationssystem ebenfalls erfasst werden, wobei die Position des mobilen Roboters bzw. von beweglichen Einrichtungen wie Handhabungseinrichtungen des Roboters ständig mit der Position der zumindest einen Person oder mit der Position benachbarter stationärer oder mobiler Roboter bzw. Handhabungseinrichtungen verglichen wird.

Eine bevorzugte Ausführungsform zeichnet sich dadurch aus, dass das Navigationssystem als Satelliten-Navigationssystem ausgebildet ist, welches vorzugseise nach dem Galileo-Prinzip arbeitet.

Ein System zur Überwachung von Kollisionen zwischen in einem definierten Bereich angeordneten stationären und/oder mobilen Robotern und zumindest einer sich in dem definierten Bereich bewegenden Person zeichnet sich dadurch aus, dass das System ein Navigationssystem zur fortlaufenden Erfassung der Position der zumindest einen Person in dem definierten Bereich aufweist, wobei die sich in dem definierten Bereich bewegende Person eine Sendereinheit aufweist, durch die die Position der Person mittels des Navigationssystems innerhalb des definierten Bereichs erfassbar ist und wobei das System einen Vergleicher aufweist, in dem die erfasste Position der zumindest einen Person mit einer dem zumindest einen Roboter zugeordneten Sicherheitszone vergleichbar ist und wobei der zumindest eine Roboter bei Annäherung und/oder bei Eintritt der Person in die Sicherheitszone entsprechend vorgegebener Sicherheitsparameter in einen sicheren Zustand schaltbar ist.

Dabei ist der definierte Bereich mit Zugangsschleusen abgesichert, die ausschließlich Personen einen Zugang zu dem definierten Bereich ermöglichen, welche die Sendereinheit tragen, die in dem Navigationssystem registriert ist.

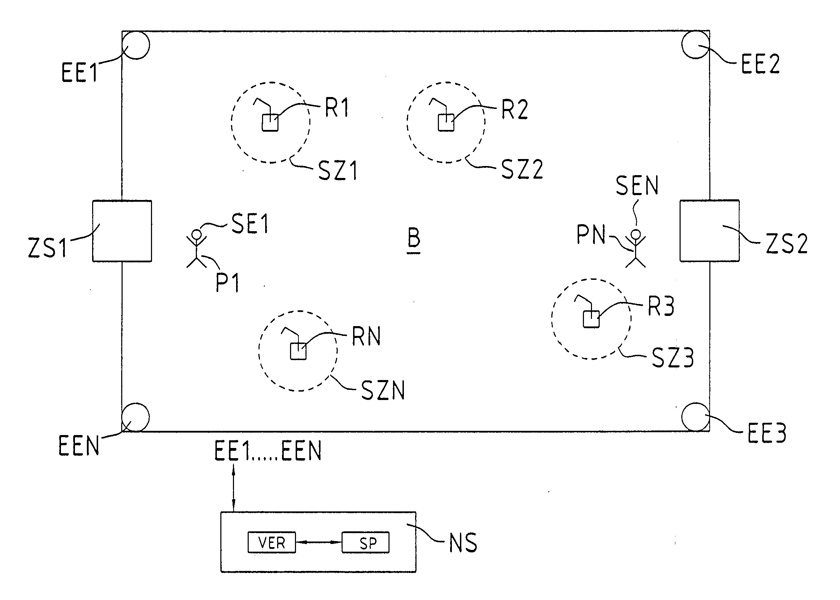

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung eines der Zeichnung zu entnehmenden Ausführungsbeispiels.

Die einzige Figur zeigt ein System zur Überwachung von Kollisionen zwischen in einem definierten Bereich B angeordneten stationären und/oder mobilen Robotern R1... RN und zumindest einer sich in dem definierten Bereich bewegenden Person P1...PN.

Erfindungsgemäß ist ein Navigationssystem NS vorgesehen, mit dem die Position der zumindest einen sich in dem definierten Bereich 12 bewegenden Person P1...PN fortlaufend erfassbar ist. Das Navigationssystem NS besteht aus einer der zumindest einen Person P1...PN zugeordneten Sendereinheit SE1...SEN sowie in dem definierten Bereich 12 angeordneten Empfangseinheiten EE1...EEN, mittels denen der definierte Bereich 12 überwachbar ist.

Die Position der Person P1...PN, welche die Sendereinheit SE1...SEN trägt, kann mittels der Empfangseinheiten EE1...EEN fortlaufend erfasst werden. Sofern es sich bei den Robotern R1...RN um stationäre Roboter handelt, ist deren Position festgelegt und in dem Navigationssystem in einer Speichereinheit SP gespeichert. Ferner ist jedem stationären Roboter R1...RN eine Sicherheitszone SZ1...SZN zugeordnet, die von vorgegebenen Sicherheitsparametern, wie Wirkungsbereich einer an dem Roboter angeschlossenen Handhabungseinrichtung, deren Geschwindigkeit, deren Bewegungen sowie der zu beschleunigenden Massen usw. abhängig ist. Die Sicherheitsparameter sowie die Sicherheitszonen SZ sind in der Speichereinheit SP gespeichert.

Zur Kollisionsüberwachung ist nun vorgesehen, die Position der zumindest einen Person P1...PN, die sich innerhalb des definierten Bereichs B bewegt, ständig mit den in der Speichereinheit SP hinterlegten Sicherheitszonen SZ1 ...SZN zu vergleichen, so dass bei Annäherung und/oder Eintritt der Person in die Sicherheitszone SZ1...SZN entsprechend der vorgegebenen Sicherheitsparameter der Roboter R1...RN in einen sicheren Zustand überführt wird bzw. abgeschaltet wird.

Die Überführung in den sicheren Zustand kann beispielsweise die Verringerung der Geschwindigkeit einer Handhabungseinrichtung des Roboters oder dessen Abschalten bewirken.

Bei einer alternativen Ausführungsform besteht die Möglichkeit, beispielsweise einen mobilen Roboter R1...RN mit einer Sendereinheit SE auszustatten und zusätzlich zu der Position der sich in dem definierten Bereich bewegenden Person P1...PN auch die Position des mobilen Roboters R1...RN ständig zu erfassen und mit der Position der Person bzw. weiteren stationären und/oder mobilen Robotern R1...RN zu vergleichen und bei Annäherung der Sicherheitszonen SZ1...SZN die Roboter in einen gefahrlosen Zustand zu überführen.

Gemäß dem erfindungsgemäßen Verfahren ist vorgesehen, dass die Sendereinheiten SE1...SEN ein Signal aussenden, welches von den Empfangseinheiten EE1...EEN erfasst wird und sodann zur Positionsbestimmung verwendet wird.

Um zu verhindern, dass Personen P1...PN einen Zugang zu dem definierten Bereich 12 erhalten, die eine Sendereinheit SE1...SEN nicht aufweisen, sind Zugangsschleusen ZS1, ZS2 vorgesehen, die einen Zugang zu dem definierten Bereich 12 zur dann freigibt, wenn die Person P1...PN eine in dem Navigationssystem NS registrierte Sendereinheit S1...SN trägt.

Zur zusätzlichen Sicherheit der Person kann diese auch mit einer Sender-/Empfängereinheit ausgestattet sein, welche bei Annäherung an die Sicherheitszone SZ1...SZN ein Signal von dem Navigationssystem NS erhält und ein Warnsignal abgibt und die Person P1...PN frühzeitig warnt.

## Patentansprüche

1. Verfahren zur Überwachung von Kollisionen zwischen in einem definierten Bereich angeordneten stationären und/oder mobilen Robotern (R1...RN) und zumindest einer sich in dem definierten Bereich (B) bewegenden Person (P1...PN),
**dadurch gekennzeichnet,**
**dass** ausschließlich Personen den definierten Bereich betreten können, die einen in dem Navigationssystem (NS) registrierten Sender/Empfänger (SE1...SEN; EE1...EEN) tragen,
**dass** die Position der Person (P1...PN) in dem definierten Bereich (B) mittels eines insbesondere nach dem Galileo-Prinzip arbeitenden Navigationssystems (NS) fortlaufend erfasst wird,
**dass** die Position der Person (P1...PN) ständig mit einer jedem Roboter (R1...RN) zugeordneten definierten Sicherheitszone (SZ1...SZN) verglichen wird und
**dass** bei Annäherung und/oder bei Eintritt der Person (P1...PN) in die Sicherheitszone (SZ1...SZN) entsprechend vorgegebener Sicherheitsparameter der jeweilige Roboter (R1...RN) in einen gefahrlosen Zustand überführt wird.

2. Verfahren nach Anspruch 1,
**dadurch gekennzeichnet,**
**dass** die Geschwindigkeit einer Handhabungseinrichtung (HE1...HEN) des Roboters (R1...RN) bei Eintritt der Person in die Sicherheitszone (SZ1...SZN) verringert wird.

3. Verfahren nach Anspruch 1 oder 2,
**dadurch gekennzeichnet,**
**dass** der Roboter (R1...RN) bei Eintritt der Person (P1...PN) in die Sicherheitszone (SZ1...SZN) abgeschaltet wird.

4. Verfahren nach zumindest einem der vorhergehenden Ansprüche,
**dadurch gekennzeichnet,**
**dass** die Person (P1...PN) vor dem Betreten des definierten Bereichs (B) eine Sendereinheit (SE1...SEN) aufnimmt und dass die Position der Person (P1...PN) durch in dem definierten Bereich angeordnete Empfänger (EEI ...EEN) erfasst wird.

5. Verfahren nach zumindest einem der vorhergehenden Ansprüche,
**dadurch gekennzeichnet,**
**dass** die Sicherheitszone (SZ1...SZN) jedes in dem definierten Bereich (B) angeordneten Roboters (R1...RN) sowie dessen spezifische Sicherheitsparameter in einem Speicher (SP) gespeichert sind.

6. Verfahren nach zumindest einem der vorhergehenden Ansprüche,
**dadurch gekennzeichnet,**
**dass** die Position jedes mobilen Roboters (R1...RN) und/oder einer beweglichen Einrichtung wie Handhabungseinrichtung des Roboters ständig erfasst und mit der Position der zumindest einen Person (P1...PN) oder der Position benachbarter Roboter (R1...RN) verglichen wird.

7. Verfahren nach zumindest einem der vorhergehenden Ansprüche,
**dadurch gekennzeichnet,**
**dass** das Navigationssystem (NS) als Satelliten-Navigationssystem ausgebildet ist, welches vorzugsweise nach dem Galileo-Prinzip arbeitet.

8. System zur Überwachung von Kollisionen zwischen in einem definierten Bereich angeordneten stationären und/oder mobilen Robotern (R1...RN) und zumindest einer sich in dem definierten Bereich (B) bewegenden Person (P1...PN),
**dadurch gekennzeichnet,**
**dass** der definierte Bereich (B) mit Zugangsschleusen (ZS1, ZS2) abgesichert ist, die ausschließlich Personen (P1...PN) einen Zugang zu dem definierten Bereich (B) ermöglichen, welche die Sendereinheit (SE1...SEN) tragen, die in dem Navigationssystem (NS) registriert sind,
**dass** das System ein Navigationssystem (NS) zur fortlaufenden Erfassung der Position der zumindest einen Person (P1...PN) in dem definierten Bereich (B) aufweist, dass die sich in dem definierten Bereich bewegende Person (P1...PN) eine Sendereinheit (SE1...SEN) aufweist, durch die die Position der Person (P1...PN) mittels des Navigationssystems (NS) innerhalb des definierten Bereichs (B) erfassbar ist, dass das System einen Vergleicher (V) aufweist, in dem die erfasste Position der zumindest einen Person (P1...PN) mit einer dem zumindest einen Roboter (R1...RN) zugeordneten Sicherheitszone (SZ1...SZN) vergleichbar ist, und
**dass** der zumindest eine Roboter (R1...RN) bei Annäherung und/oder bei Eintritt der Person in die Sicherheitszone (SZ1...SZN) entsprechend vorgegebener Sicherheitsparameter in einen sicheren Zustand schaltbar ist.
